Europäisches Patentamt

European Patent Office

Office européen des brevets

(19)

(11) Veröffentlichungsnummer: **0 101 865**
**B1**

# EUROPÄISCHE PATENTSCHRIFT

(12)

(45) Veröffentlichungstag der Patentschrift:
02.04.86

(21) Anmeldenummer: 83106934.9

(22) Anmeldetag: 15.07.83

(51) Int. Cl.⁴: **B 60 P 1/44**, H 02 B 1/12

(54) **Bedien- und Steuerelementekasten für elektrisch gesteuerte Zusatzgeräte von Lastfahrzeugen, insbesondere von Hubladebühnen.**

(30) Priorität: 02.08.82 DE 3228798

(43) Veröffentlichungstag der Anmeldung:
07.03.84 Patentblatt 84/10

(45) Bekanntmachung des Hinweises auf die Patenterteilung:
02.04.86 Patentblatt 86/14

(84) Benannte Vertragsstaaten:
AT BE CH DE FR GB IT LI LU NL SE

(56) Entgegenhaltungen:
CA - A - 1 120 573
DE - A - 2 937 029
DE - A - 3 024 708
US - A - 2 511 365
US - A - 3 477 609
US - A - 3 847 292
US - A - 4 102 466
US - A - 4 265 365

PATENTS ABSTRACTS OF JAPAN, Band 3, Nr. 145
(E-155), Seite 6 E 155

(73) Patentinhaber: Emil Dautel GmbH,
Postfach 30 Dieselstrasse 30, D-7105 Leingarten (DE)

(72) Erfinder: Dautel, Helmut, Augelbaumstrasse 72,
D-7105 Leingarten (DE)
Erfinder: Kilgus, Karl Heinz, Ulrich-Hahn-Strasse 16,
D-7124 Bönnigheim (DE)
Erfinder: Dieffenbach, Karl, Am Schalkstein 5,
D-7121 Walheim (DE)

(74) Vertreter: Utermann, Gerd, Dipl.-Ing.,
Kilianstrasse 7 Kilianspassage Postfach 3525,
D-7100 Heilbronn (DE)

## Beschreibung

Die Erfindung betrifft einen Bedien- und Steuerelementekasten für elektrisch gesteuerte Zusatzgeräte von Lastfahrzeugen, insbesondere von Hubladebühnen, der unter einem wegklappbaren Deckel in einem Gehäuse die Bedienelemente und unter einer Tragplatte Steuerelemente aufweist.

Die Steuerstelle für die manuelle Bedienung von heckseitig angebauten Hubladebühnen od. dgl. befindet sich am hinteren Aufbauende auf der Fusswegseite. Solche Ladegeräte werden in der Regel hydraulisch betrieben und elektrisch mit Hilfe von Magnetventilen gesteuert. Ausser einer Fusssteuerung auf der eigentlichen Plattform ist eine Handsteuerung für die stehende Bedienungsperson erforderlich. Diese muss in der Nähe der Hubladebühne angeordnet sein und befindet sich folglich hinter dem Hinterrad im grössten Schmutzbereich. Nicht nur während des Fahrbetriebs auf nasser Strasse, sondern auch beim Waschen in Waschanlagen und mit Dampfstrahlgeräten ist der Bedien- und Steuerelementekasten erheblichen Wasser- und Verschmutzungsbelastungen ausgesetzt. Bisher hat man handelsübliche oder speziell aus Blech od. dgl. gefertigte Kästen verwendet, die einen Verschlussdeckel in der Regel mit einem Knebelgriff enthalten. Damit der Deckel während der Bedienung nicht auf den Händen liegt oder nicht extra durch zusätzliche verschleissanfällige Elemente gesichert werden muss, wird er nach unten weggeklappt. Die Steuerelemente-Tragplatte liegt in der Regel senkrecht. Entweder sind die Verschliesselemente abgenutzt oder das Verschliessen wird vergessen. So sind die Bedienelemente erheblichen Verschmutzungen ausgesetzt. Man könnte zwar die elektrischen Steuerelemente wie Schalter od. dgl. hermetisch abschliessen. Dabei wäre jedoch Kondenswasserbildung in erheblichem Masse zu befürchten, was die elektrische Funktionsfähigkeit beeinflussen würde, denn ein Lastfahrzeug ist erheblichen Temperaturschwankungen ausgesetzt, beispielsweise einerseits in beheizten Garagen und andererseits bei tiefen Aussentemperaturen.

Geeignete Bedien- und Steuerelementekästen für gerade diesen Zweck liessen sich bisher nicht finden, weil die handelsüblichen Kästen für andere Einsatzzwecke konzipiert sind.

Der Erfindung liegt die Aufgabe zugrunde, einen Bedien- und Steuerelementekasten der eingangs genannten Art vorzuschlagen, der schwall- und spritzwassergeschützt, aber genügend belüftet ist, so dass sich kein Kondenswasser bildet, evtl. eindringendes Wasser abfliessen lässt, die Bedienelemente gut bedienbar und leicht erkennbar enthält und mit einem Deckel versehen ist, der bei der Bedienung nicht stört und sogar bei leichten Fahrerschütterungen schon automatisch schliesst.

Erfindungsgemäss ist vorgesehen, dass im Gehäuse die oben nach hinten geneigt angeordnete Tragplatte gegenüber dem Öffnungsrand zurückgesetzt angeordnet ist und mindestens die untere Innenwand des Geräteraumes in Richtung auf die Gehäuseöffnung und vorzugsweise in Richtung auf die Unterkante der Tragplatte geneigt ist und wenigstens die obere Gehäusewand mindestens eine Schwallwasserstufe oder Schwallwasserrippe aufweist und ein oben angelenkter, die Gehäuseöffnung allseits umgreifender Deckel vorgesehen ist, der in der oberen Öffnungslage nur geringfügig über den oberen Totpunkt hinausgeschwenkt abgestützt ist.

Durch die geneigte Lage der Tragplatte kann in der Anbringungshöhe unter der Ladefläche die Bedienungsperson die Bedienelemente leicht einsehen und in Normalhaltung der Arme und des Körpers mühelos bedienen. In den Innenraum gelangtes Wasser kann frei ablaufen, auf jeden Fall in einen Bereich, in dem es nur eine geringe Verdunstungsoberfläche bietet. Auftretendes Schwall- oder Spritzwasser wird von Stufen und Rippen zurückgehalten und der allseits übergreifende Deckel verhindert das Eintreten von der Öffnungsseite. Durch seine zur Schwerpunktlage geeignete Anlenkung und die Abstützung im Bereich des oberen Totpunktes derart, dass er ein fast instabiles Gleichgewicht einnimmt, ist gesichert, dass der Deckel während des Stands des Fahrzeugs offen bleibt, leicht geschlossen werden kann und sollte er vergessen sein, durch die Erschütterungen der Fahrbewegung sich automatisch schliesst, so dass die Bedienelemente vor Beschädigung und Verschmutzung geschützt sind.

Eine leicht herzustellende, für Einbau und Benutzung günstige Ausgestaltung der Erfindung sieht vor, dass das Gehäuse in allen vier Seitenwänden Stufen aufweist, die im Inneren eine geneigte Auflagefläche für die Tragplatte bilden, an die sich nach hinten ein in der Höhe und vorzugsweise auch in der Breite kleiner als der Bedienelementeraum ausgebildeter Geräteraum anschliesst, dessen Wände in Richtung auf die Stufe allseits divergierend ausgebildet sind. Eine solche Anordnung lässt aussen das Wasser gut ablaufen und Schwall- und Spritzwasser nicht bis zum Bedienelementeraum hochsteigen und von vorn eindringen. Trotzdem fliesst eingedrungenes Wasser aus dem Geräteraum leicht ab. Die Tragplatte kann günstig montiert werden. Um weitere Verbesserungen für evtl. eingedrungenes Wasser im Geräteraum zu schaffen, kann die untere Wand des Gehäuses in Richtung auf eine Flüssigkeitsrinne oder Flüssigkeitsöffnung geneigt ausgebildet sein. So läuft evtl. vorhandenes Wasser nicht über die ganze Breite in den Bereich der Stufe, sondern in einen noch kleineren rinnenförmigen Raum, wodurch die Verdunstungsoberfläche weiter verkleinert wird.

Der Bedienelementeraum wird vorn zweckmässig von einem senkrecht verlaufenden Bedienelementeraumrand begrenzt, über den der schwenkbare Deckel greift. Der Bedienelementeraumrand kann zweckmässig eine auswärtsragende Schwallwasserrippe aufweisen, die ausser der Stufe dem weiteren Vordringen von Wasser entgegenwirken kann.

Der Deckel kann zweckmässig eine gerade, vorzugsweise senkrechte Vorderwand, eine zur Horizontalen leicht nach hinten unten geneigte Unterwand, die bis zur Stufe des Gehäuses reicht, etwa trapezförmige Seitenwände, die von der Vorderwand bis zur Schwallwasserstufe des Gehäuses reichen, und eine die obere Schwallwasserrippe übergreifende Oberwand aufweisen, die jedoch kürzer als die oberen Bereiche der Seitenwände derart ausgebildet ist, dass ihre Kante sich in der Öffnungsstellung auf die jenseits der Schwallwasserstufe liegende obere Wand des Geräteraumes auflegt und den Deckel nahe der oberen Totpunktlage abstützt. Eine solche Deckelausbildung ist bei leichter Herstellbarkeit für die Verhinderung des Wassereintritts und die sichere Abdeckung des Bedienelementeraumes günstig und lässt auf ihrer Unterwand Wasser günstig abfliessen. Der Deckel kann einfach gelagert und zum Schwerpunkt richtig abgestützt werden.

Für die Ausbildung aller Gelenke kann eine durch die Seitenwände des Deckels und die Seitenwände des Bedienelementeraumes verlaufende Achse vorgesehen sein. Diese kann eine zusätzliche Funktion übernehmen, indem sie im oberen Bereich vor der Tragplatte liegt und diese auf die Auflagefläche der Stufe gedrückt hält.

Zwischen Tragplatte und Auflagefläche kann zweckmässig eine gasdurchlässige, elastische Auflagedichtung vorgesehen sein, die vorzugsweise aus Moosgummi besteht. Sie sichert einerseits das klapperfreie Befestigen der Tragplatte, auch wenn diese nur mit Anlageelementen wie der durchsteckbaren Achse gehalten ist. Andererseits verhindert sie das direkte Eintreten von Wasser in den Geräteraum, falls einmal in den Bedienelementeraum beim Waschen Wasser gespritzt werden sollte. Ausserdem lässt sie jedoch den Gasaustausch mit dem Geräteraum zu, so dass darin kein Schwitzwasser gebildet wird. Auch lässt sie evtl. unten gesammeltes Wasser wieder austreten.

Die Tragplatte kann im unteren Bereich am Gehäuse mit Schrauben befestigt sein, die vorzugsweise zugleich eine Deckelbewegungssicherung befestigen. So ist die Montage mit wenigen Schrauben möglich. Sie kann jedoch im unteren Bereich auch hinter Haltenasen gesteckt sein. So ist nur die Scharnierachse einzustecken und die Zahl der Teile weiter verringert. Die Deckelbewegungssicherung kann aus einer Rasteinrichtung oder einer Magnethalteeinrichtung mit einfachen Magneten und Metallplättchen bestehen.

Gehäuse und vorzugsweise auch Deckel werden zweckmässig aus tiefgezogenem Kunststoffmaterial vorzugsweise ABS — Akrylnitril-Butadien-Styrol — bestehen. Durch die günstige Formengebung des Gehäuses, die der zweckmässigen Aufnahme und dem Wasserablauf sowie der leichten Montage dient, ist des weiteren die einfache und preiswerte Herstellbarkeit im Tiefziehverfahren gewährleistet, die mit einfachen Werkzeugen auskommt und trotzdem ausreichende Stabilität und Sicherheit gegen alle Gefahren während des langjährigen Betriebes gewährleistet. Kabeleinführungen werden zweckmässig nur in den Seitenwänden und der Unterwand vorgesehen, so dass die Gefahr von ungewollt eindringendem Wasser verringert wird. Auch die Befestigung sollte im Bereich der Unterwand vorgesehen werden. Weitere Einzelheiten, Ausgestaltungen, Merkmale und Vorteile der Erfindung ergeben sich auch aus dem nachfolgenden, anhand der Zeichnungen abgefassten Beschreibungsteil.

Ein Ausführungsbeispiel der Erfindung wird nachfolgend anhand der Zeichnungen näher erläutert und beschrieben.

Es zeigen:

Fig. 1 die Seitenansicht eines Lastfahrzeuges mit angebauter Hubladebühne und Bedien- und Steuerelementekasten;

Fig. 2 einen leicht vergrösserten, mehr schematischen Teilschnitt längs der Linie 2-2 in Fig. 1 durch den Ladeboden des Fahrzeuges und den darunter angebrachten Bedien- und Steuerelementekasten;

Fig. 3 eine Ansicht in etwas grösserem Massstab auf den geöffneten Bedien- und Steuerelementekasten;

Fig. 4 eine Seitenansicht des Bedien- und Steuerelementekastens mit geschlossenem Deckel, etwa im Massstab 1:1;

Fig. 5 eine der Fig. 4 entsprechende Darstellung, jedoch im Schnitt und mit strichpunktierter Andeutung der Öffnungsposition des Deckels, und

Fig. 6 einen Horizontalteilschnitt längs der Linie 6-6 in Fig. 3 durch die Seitenwand im Bereich der Schwallwasserstufe.

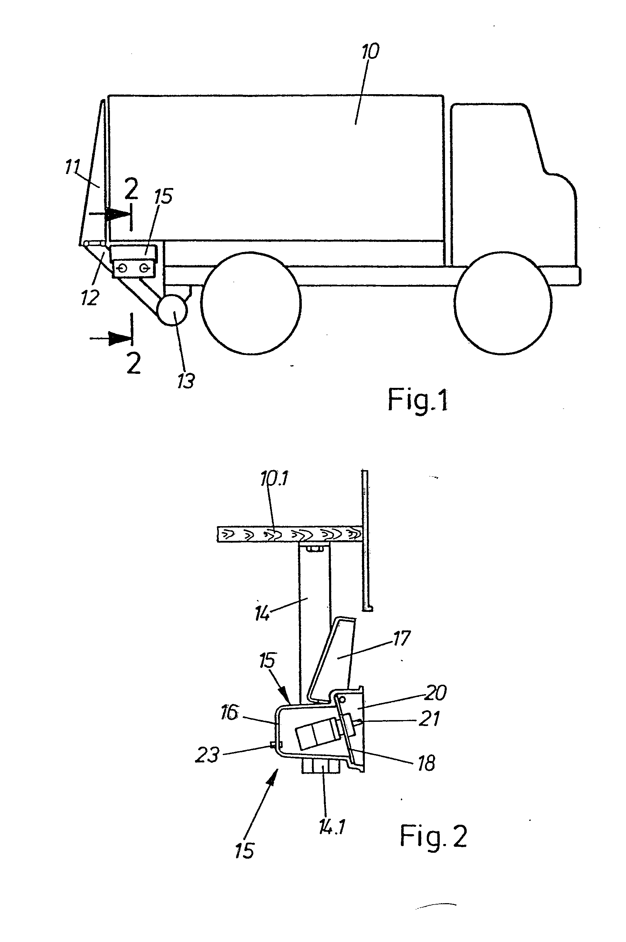

Das Lastfahrzeug 10 nach Fig. 1 hat an seinem Heck eine Hubladebühne 11, die mit Lenkern 12 an einem Lagerungs- und Antriebsteil 13 angebracht ist, welches seinerseits am Fahrzeuggestell befestigt ist. Für die Bedienung der Hubladebühne 11 ist ein Bedien- und Steuerelementekasten 15 vorgesehen, der mit einem Haltebügel 14 unter dem Ladeboden 10.1 befestigt ist. Dabei geht ein Horizontalabschnitt 14.1 unter den Bedien- und Steuerelementekasten 15 durch und dieser ist mit von unten eingreifenden Schrauben darauf im Abstand befestigt, so dass von oben kein Wasser durch Befestigungslöcher einsickern kann.

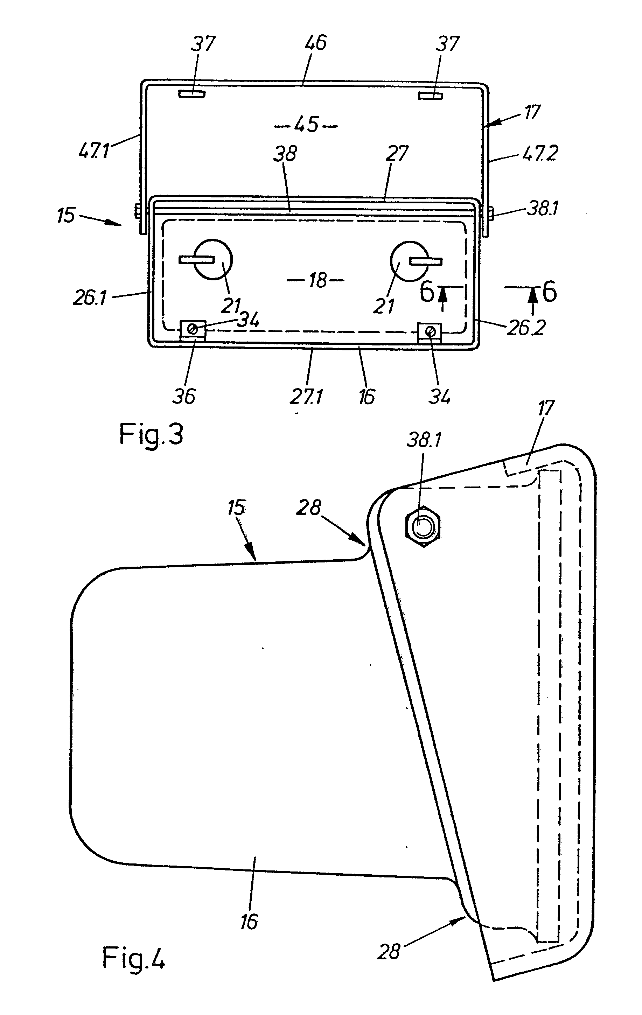

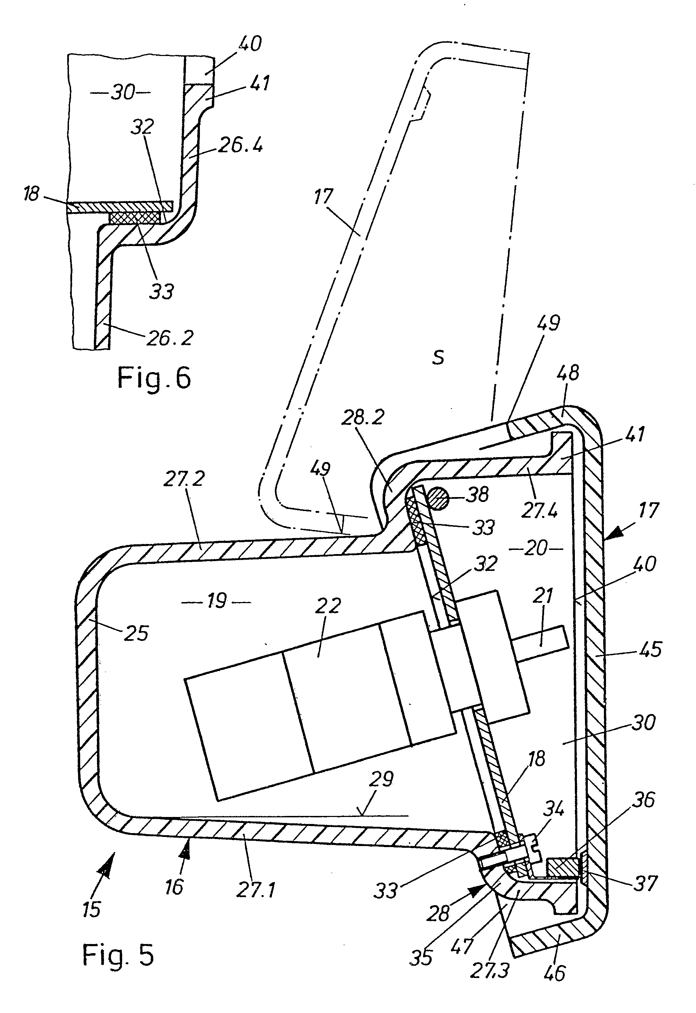

Der in den Fig. 2 bis 6 näher dargestellte Bedien- und Steuerelementekasten 15 hat ein Gehäuse 16, einen Deckel 17 und eine Tragplatte 18. Die Tragplatte 18 teilt im Gehäuse 16 einen Geräteraum 19 und einen Bedienelementeraum 20 voneinander ab. Im Geräteraum 19 liegen die Steuerelemente 22, beispielsweise Drehschalter, Tastschalter od. dgl. Sie sind an der Tragplatte 18 befestigt und die Bedienelemente 21, hier beispielsweise Drehschaltergriffe 21, liegen im Bedienelementeraum 20. Hier sind beispielsweise zwei Drehschalter dargestellt, wie man es in Fig. 3 sieht. Leitungen, Kabel, sonstige Schaltelemente wie Relais u. dgl. sind der Übersichtlichkeit halber weggelassen. In Fig. 2 ist eine Kabeleinführung 23 dargestellt, die beispielsweise eine abgedichtete, eingesetzte und das Kabel dicht umschliessende Kabeltülle sein kann. Der Geräteraum 19 wird von einer Rückwand 25, zwei Seitenwänden 26.1 und 26.2, einer unteren Wand 27.1 und einer oberen Wand 27.2 umgeben. Sie sind Bestandteil der Wände des Gehäuses 16 und reichen bis zu einer Schwallwasserstufe 28, die – wie aus den Fig. 2, 4 und 5 ersichtlich – geneigt angeordnet ist. Die Rückwand 25 steht in der Einbaulage senkrecht, während die untere Wand 27.1 zur Horizontalen 29 – wie aus Fig. 5 ersichtlich – in Richtung auf die Tragplatte 18 und zugleich in Richtung auf die Gehäuseöffnung 30 nach unten abfallend geneigt ist. Sie divergiert mit der oberen Wand 27.2 in Richtung auf die Tragplatte 18. Das dient dazu, auf der oberen Wand 27.2 das Wasser in Richtung auf die Rückwand 25 laufen zu lassen, beispielsweise bei Fahrt im Regen oder beim Waschen. Unbeabsichtigt in den Geräteraum 19 gelangtes Wasser kann auf der unteren Wand 27.1 in Richtung auf die Tragplatte 18 und die Gehäuseöffnung 30 abfliessen. Es bleibt auf jeden Fall nicht grossflächig stehen, sondern sammelt sich in der Ecke bei der Tragplatte 18 und bietet so nur eine kleine Verdunstungsfläche, so dass die Schwitzwasserbildung während des Ablaufens gering ist. Zusätzlich kann die untere Gehäusewand 27.1 mit einer entsprechenden Sammelrinne und auch einer Neigung in Richtung auf diese Sammelrinne ausgestattet sein. Entsprechend geneigt und gestuft sind auch die Seitenwände 26.1 und 26.2. So ergibt sich eine ebene, jedoch oben nach hinten geneigte Auflagefläche 32, die der Stufenhöhe entspricht und gut aus Fig. 5 zu erkennen ist. Auf dieser ist rings umlaufend eine Moosgummidichtung 33 aufgelegt, welche gasdurchlässig ist, jedoch eintretendes Spritzwasser zurückhält und somit den Geräteraum 19 von Wasser freihält. Auf der Moosgummidichtung 33 liegt die Tragplatte 18 auf. Sie ist im Bereich der unteren Wand 27.1 mit Hilfe der Schrauben 34 in dem Stufenteil 35 der unteren Wand festgeschraubt. Diese Schrauben 34 tragen zugleich Magnete 36, die mit Metallplättchen 37 am Deckel 17 zusammenwirken und die Deckelbewegungssicherung darstellen. Im oberen Bereich liegt die Tragplatte 18 hinter der Scharnierachse 38, die so angeordnet ist, dass sie die Tragplatte 18 fest auf den Moosgummistreifen 33 und damit auf die Auflagefläche 32 drückt.

Der Bedienelementeraum 20 ist aussen begrenzt von der oberen Wand 27.4, die sich an die Stufe 28.2 oben anschliesst und bis zur Gehäuseöffnung 30 reicht und ebenfalls leicht nach hinten unten abfallend ausgebildet ist. Senkrechte Seitenwandteile 26.4 sind trapezförmig und reichen ebenfalls von der Stufe 28 bis zur Gehäuseöffnung 30. Sie gehen dort in den Bedienelementeraumrand 40 über. Dieser ist hier senkrecht ausgebildet, so dass sich ein im Vertikalschnitt trapezförmig gestalteter länglicher Raum ergibt, in dem die Bedienelemente 21 gut geschützt, leicht erreichbar und gut sichtbar untergebracht sind. Der Bedienelementeraumrand 40 hat aussen eine Schwallwasserrippe 41. Diese verhindert, dass von den Seitenwänden 26.3 und 26.4 und der oberen Wand 27.4 auf diesen hochströmendes Wasser in die Gehäuseöffnung 30 gelangt. Sie ist ausserdem vorteilhaft für die Herstellung, weil das gesamte Gehäuse aus einem geeigneten Kunststoff, nämlich vorzugsweise Akrylnitril-Butadien-Styrol hergestellt wird. Dabei handelt es sich um ein thermoplastisch, im Tiefziehverfahren auch mit relativ grosser Wandstärke gut verarbeitbares Material, so dass man eine Kasten- und Rippenstärke von etwa 3 bis 5 mm erzielen kann. Da das Gehäuse aus ebenem Material tiefgezogen wird, ist ein Materialzufluss und Halterand ohnehin erforderlich. Dieser bleibt dann beim Entfernen des überschüssigen Materials als Schwallwasserrippe 41 stehen.

Die untere Wand 27.3 des Bedienelementeraumes 20 ist verhältnismässig kurz, aber ausreichend zur Aufnahme der Magnete, zumal die Bedienelemente ohnehin relativ hoch liegen und der Raum frei ist. Er wird auf der Tragplatte 18 lediglich als Fläche zur Anbringung von Bedienungshinweisen u. dgl. benötigt. Die Wand 27.3 ist ebenfalls zur Horizontalen geneigt, so dass Wasser, welches in den Bedienelementeraum 20 gelangt oder durch das Moosgummi 33 im Bereich des unteren Endes oder einen dazwischen gelassenen Raum hindurch gelangt, leicht abfliessen kann.

Die Gehäuseöffnung 30 mit ihrer Schwallwasserrippe 41 wird – wie besonders aus den Fig. 4 und 5 ersichtlich – von einem Deckel 17 verschlossen. Dieser hat eine senkrechte Deckelvorderwand 45, die beispielsweise das Firmenzeichen des Herstellers oder der einbauenden Firma tragen kann, im übrigen jedoch eben ist, ggf. mit einem Griff ausgestattet sein kann und die in eine, wie gut ersichtlich, stark geneigte Unterwand 46 übergeht. Zwischen der Deckelvorderwand 45 und der Unterwand 46 sind einstückig mit dieser die trapezförmigen Seitenwände 47 ausgebildet, die sich über die ganze sichtbare Fläche vollflächig erstrecken und mit Rundungen in die Unterwand 46 und die Vorderwand 45 übergehen und die Schwallwasserrippe 41 umgreifen. Ihre Begrenzungen reichen bis zur Stufe 28, so dass die Unterwand 46 und die Seitenwände in diesem Bereich relativ kurz sind, während die Seitenwände im oberen Bereich relativ breit sind. Zwischen den Seitenwänden 47 und der Vorderwand 45 ist eine kurze Oberwand 48 ausgebildet, wie es Fig. 5 im Schnitt gut veranschaulicht. Sie ist einstückig mit den übrigen Deckelteilen ausgebildet und zwar ebenfalls im Tiefziehverfahren, reicht jedoch nur bis zu ihrer Stützkante 49, die etwa im ersten Drittel von der Vorderwand 45 aus gesehen endet und geht dort in die bis oben reichenden Seitenwände über. Sie übergreift die Schwallwasserrippe 41 ausreichend, so dass von oben kommendes Regen- oder Waschwasser einwandfrei auf die obere Wand 27.4 und 27.2 des Gehäuses geleitet wird und nicht in die Gehäuseöffnung 30 eindringt. Die Lage der Kante 49 ist jedoch im Verhältnis zur Achse 38 so bemessen, dass bei hochgeklapptem Deckel 17 – wie es in Fig. 5 strichpunktiert angedeutet ist – die Kante 49 über die Stufe 28 hinausgelangen und sich auf der oberen Wand 27.2 abstützen kann. Zur Lagerung des nach oben schwenkbaren Deckels 17 ist die Achse 38 durch passende Bohrungen in den Seitenwänden 26.3, 26.4 und 47.1 und 47.2 von Gehäuse 16 und Deckel 17 geführt und mit Aussenmuttern 38.1 oder Stiften od. dgl. gesichert. Die Lage der Achse 38 als Gelenkachse für den Deckel ist zum Schwerpunkt S des Deckels so gewählt, dass der Deckel in der oberen aufgeklappten Stellung, wenn seine Oberwandkante 49 sich auf der oberen Wand 27.2 des Gehäuses 16 abstützt, den oberen Totpunkt der Schwenklage gerade um einen ganz geringen Winkelbetrag, beispielsweise einige wenige Millimeter, hinausbewegt hat, so dass eine gerade eben stabile jedoch fast instabile Lage erreicht ist. Sinn dieser Anordnung ist es, dass der Deckel bei ruhigstehendem Fahrzeug selbsttätig offen bleibt, jedoch leicht geschlossen werden kann, vor allem, wenn das Schliessen vergessen wurde, bei der leichtesten Erschütterung durch die Fahrbewegung sich selbsttätig schliesst. Da er, wie ersichtlich, die Gehäuseöffnung 30 allseits gut umschliesst, andererseits evtl. eintretendes Wasser jedoch gut abfliessen lässt, ist auch bei starkem Regen oder in Waschanlagen keine übermässige Feuchtigkeitsbelastung der Bedienelemente 21 zu befürchten. Auch der Deckel 17 wird aus dem gleichen Material im Tiefziehverfahren hergestellt wie das Gehäuse. Beide können auch im Spritzgussverfahren aus geeignetem Material hergestellt oder auch aus Blech in den üblichen Verfahren geformt sein. Auch können die formmässigen Ausgestaltungen abweichen. Man braucht die Stufe nicht ringsum auszuführen, man kann mehrere Stufen oder nur Schwallwasserrippen od. dgl. vorsehen. Die dargestellte Ausführungsform ist jedoch von Aufbau und der Herstellung besonders einfach, günstig in der Anordnung der Bedienelemente und leicht herzustellen sowie formmässig ansprechend. Der Deckel kann auch leicht mit einem Schloss versehen werden.

Die erfindungsgemässe Lösung und ihr Ausführungsbeispiel bieten vor allem folgende Vorteile:

— verdeckte Bedienungselemente zum Schutz vor mechanischer Beschädigung, Verschmutzung und ggf. vor Missbrauch
— während der Fahrt selbst zufallender Deckel
— kein Verschlussknebel am Deckel erforderlich, sondern Festhalten durch Eigengewicht oder durch Magnet od. dgl.
— leichte Einsehbarkeit der Bedienelemente durch die Bedienungsperson und Bedienung in Normalhaltung der Arme und des Körpers infolge schräggestellter Tragplatte für die Bedienelemente
— seitlich gut umgreifender Deckel
— Schwallkanten im Deckelrandbereich
— Selbstentwässerung aller Räume nach vorne
— einfache Scharniere
— vielseitige Einsatzmöglichkeiten und Anordnung der verschiedensten Steuerelemente und Bedienelemente
— ansprechendes Äusseres und rostfreie Ausgestaltung bei guten Einführmöglichkeiten und Abdichtungen der Kabeleinführung und Befestigungen

**Patentansprüche**

1. Bedien- und Steuerelementekasten (15) für elektrisch gesteuerte Zusatzgeräte von Lastfahrzeugen (10), insbesondere von Hubladebühnen (11), der unter einem wegklappbaren Deckel (17) in einem Gehäuse (16, 20) die Bedienelemente (21) und unter einer Tragplatte (18) die Steuerelemente (22) aufweist, dadurch gekennzeichnet, dass im Gehäuse (16) die oben nach hinten geneigt angeordnete Tragplatte (18) gegenüber dem Öffnungsrand (30, 40) zurückgesetzt angeordnet ist und mindestens die untere Innenwand (27.1, 27.3) des Geräteraumes (19) in Richtung auf die Gehäuseöffnung (30) und vorzugsweise in Richtung auf die Unterkante der Tragplatte (18) geneigt ist und wenigstens die obere Gehäusewand (27.2, 27.4) mindestens eine Schwallwasserstufe (28) oder Schwallwasserrippe (41) aufweist und ein oben angelenkter, die Gehäuseöffnung (30, 40, 41) allseits umgreifender Deckel (17) vorgesehen ist, der in der oberen Öffnungslage (Fig. 5) geringfügig über den oberen Totpunkt hinausgeschwenkt abgestützt ist.

2. Kasten nach Anspruch 1, dadurch gekennzeichnet, dass das Gehäuse (16) in allen vier Seitenwänden (26, 27) Stufen (28) aufweist, die im Innern eine geneigte Auflagefläche (32) für die Tragplatte (18) bilden, an die sich nach hinten ein in der Höhe und vorzugsweise auch in der Breite kleiner als der Bedienelementeraum (20) ausgebildeter Geräteraum anschliesst, dessen Wände (26.1, 26.2, 27.1, 27.2) in Richtung auf die Stufe (28) allseits divergierend ausgebildet sind.

3. Kasten nach Anspruch 1 oder 2, dadurch gekennzeichnet, dass die untere Wand (27.1) des Gehäuses (16) in Richtung auf eine Flüssigkeitsrinne und/oder -öffnung geneigt ausgebildet ist.

4. Kasten nach wenigstens einem der vorstehenden Ansprüche, dadurch gekennzeichnet, dass der Bedienelementeraum (20) vorn von einem senkrecht verlaufenden Bedienelementeraumrand (40) begrenzt ist, über den der schwenkbare Deckel (17) greift.

5. Kasten nach Anspruch 4, dadurch gekennzeichnet, dass der Bedienelementeraumrand (40) eine auswärtsragende Schwallwasserrippe (41) aufweist.

6. Kasten nach wenigstens einem der vorstehenden Ansprüche, dadurch gekennzeichnet, dass der Deckel (17) eine gerade, vorzugsweise senkrechte Deckelvorderwand (45), eine zur Horizontalen nach hinten geneigte Unterwand (46), die bis zur Stufe (28) des Gehäuses (16) reicht, etwa trapezförmige Seitenwände (47), die von der Deckelvorderwand (45) bis zur Schwallwasserstufe (28) des Gehäuses (16) reichen, und eine die obere Schwallwasserrippe (41) übergreifende Oberwand (48) aufweist, die jedoch kürzer als die oberen Bereiche der Seitenwände (47) derart ausgebildet ist, dass ihre Stützkante (49) sich in der Öffnungsstellung auf die jenseits der Schwallwasserstufe (28) liegende, obere Wand (27.2) des Geräteraumes (19) auflegt und den Deckel (17) nahe der oberen Totpunktlage abstützt.

7. Kasten nach wenigstens einem der vorstehenden Ansprüche, dadurch gekennzeichnet, dass für alle Gelenke eine durch die Seitenwände (47) des Deckels und die Seitenwände (26.3, 26.4) des Bedienelementeraumes (20) verlaufende Scharnierachse (38) vorgesehen ist.

8. Kasten nach Anspruch 7, dadurch gekennzeichnet, dass die Scharnierachse (38) im oberen Bereich vor der Tragplatte (18) liegt und diese auf die Auflagefläche (32) der Stufe (28) gedrückt hält.

9. Kasten nach wenigstens einem der vorstehenden Ansprüche, dadurch gekennzeichnet, dass zwischen Tragplatte (18) und Auflagefläche (32) eine gasdurchlässige, elastische Auflagedichtung (33) vorgesehen ist, die vorzugsweise aus Moosgummi besteht.

10. Kasten nach wenigstens einem der vorstehenden Ansprüche, dadurch gekennzeichnet, dass die Tragplatte (18) im unteren Bereich am Gehäuse (16) mit Schrauben (34) befestigt ist, die vorzugsweise zugleich die Deckelbewegungssicherung (36) befestigen.

11. Kasten nach wenigstens einem der Ansprüche 1 bis 9, dadurch gekennzeichnet, dass die Tragplatte (18) im unteren Bereich hinter Haltenasen gesteckt ist.

12. Kasten nach wenigstens einem der vorstehenden Ansprüche, dadurch gekennzeichnet, dass die Deckelbewegungssicherung aus einer Rast- oder Magnethalteeinrichtung (36, 37) besteht.

13. Kasten nach wenigstens einem der vorstehenden Ansprüche, dadurch gekennzeichnet, dass Gehäuse (16) und vorzugsweise auch Deckel (17) aus tiefgezogenem Kunststoffmaterial, vorzugsweise Akrylnitril-Butadien-Styrol (ABS) bestehen.

14. Kasten nach wenigstens einem der vorstehenden Ansprüche, dadurch gekennzeichnet, dass Kabeleinführungen und Halterungen in Seitenwänden (26) und der Unterwand (27.1) vorgesehen sind.


## Claims

1. An operating and control element housing (15) for electrically controlled attachments on lorries (10), in particular loading platforms (11), which comprises operating elements (21) in a casing (16, 20) below a cover (17) which can be swung away and control elements (22) below a mounting plate (18), characterized in that the mounting plate (18) inclined downwards from the top is offset with respect to the opening edge (30, 40) in the casing (16) and at least the bottom inner wall (27.1, 27.3) of the attachments space (19) is inclined towards the casing opening (30) and preferably towards the lower edge of the mounting plate (18) and at least the top wall (27.2, 27.4) of the casing comprises at least one splash step (28) or splash rib (41) and an upwardly articulated cover (17) is provided which engages around the casing opening (30, 40, 41) on all sides and which is supported in the upper opening position (Fig. 5) swung slightly outwards over the top dead centre.

2. A housing according to Claim 1, characterized in that in all four side walls (26, 27) the casing (16) comprises steps (28) which form an inclined bearing surface (32) in the interior for the mounting plate (18), which is adjoined at the rear by an attachments space which is made smaller than the operating element space (20) in height and preferably also in width and the walls (26.1, 26.2, 27.1, 27.2) of which diverge on all sides towards the step (28).

3. A housing according to Claim 1 or 2, characterized in that the bottom wall (27.1) of the casing (16) is inclined towards a channel and/or opening for liquids.

4. A housing according to at least one of the preceding Claims, characterized in that the operating element space (20) is bounded in front by a vertically extending edge (40) of the operating element space over which the pivotable cover (17) engages.

5. A housing according to Claim 4, characterized in that the edge (40) of the operating element space comprises an outwardly projecting splash rib (41).

6. A housing according to at least one of the preceding Claims, characterized in that the cover (17) comprises a straight, preferably vertical front wall (45), a bottom wall (46) which is inclined towards the rear with respect to the horizontal and which extends as far as the step (28) of the casing (16), approximately trapezoidal side walls (47) which extend from the front wall (45) of the cover as far as the splash step (28) of the casing (16), and a top wall (48) which engages over an upper splash rib (41) but which is made shorter than the upper areas of the side walls (47) in such a way that in the opened position their support edge (49) rests on the top wall (27.2) of the attachments space (19) disposed on the other side of the splash step (28) and supports the cover (17) close to the top dead-centre position.

7. A housing according to at least one of the preceding Claims, characterized in that one hinge pin (38) extending through the side walls (47) of the cover and the side walls (26.3, 26.4) of the operating element space (20) is provided for all the articulation points.

8. A housing according to Claim 7, characterized in that the hinge pin (38) is disposed in the upper area in front of the mounting plate (18) and holds the latter pressed against the bearing surface (32) of the step (28).

9. A housing according to at least one of the preceding Claims, characterized in that a gas-permeable resilient bearing seal (33), which preferably consists of rubber sponge, is provided between the mounting plate (18) and the bearing surface (32).

10. A housing according to at least one of the preceding Claims, characterized in that the lower area of the mounting plate (18) is secured to the casing (16) by crews (34) which preferably secure at the same time the means (36) for preventing the cover from moving.

11. A housing according to at least one of Claims 1 to 9, characterized in that the mounting plate (18) is inserted in the lower area behind holding studs.

12. A housing according to at least one of the preceding Claims, characterized in that means for preventing the cover from moving consists of a catch device or a magnetic holding device (36, 37).

13. A housing according to at least one of the preceding Claims, characterized in that the casing (16) and preferably also the cover (17) consist of deep-drawn plastics material, preferably acrylonitrile butadiene styrene (ABS).

14. A housing according to at least one of the preceding Claims, characterized in that cable inlets and holding means are provided in the side walls (26) and the bottom wall (27.1).

## Revendications

1. Boîte des éléments de manœuvre et de commande (15) pour des appareils supplémentaires, à commande électrique, de camions (10), en particulier de planchers chargeurs élévateurs (11), qui présente sous un couvercle rabattable (17) dans un carter (16, 20) les éléments de manœuvre (21) et sous une plaque-support (18) les éléments de commande (22), caractérisée en ce que dans le carter (16) la plaque-support (18), disposée inclinée en montant vers l'arrière, est disposée en retrait par rapport au bord de l'ouverture (30, 40), et en ce qu'au moins la paroi intérieure inférieure (27.1, 27.3) du compartiment des appareils (19) est inclinée en direction de l'ouverture du carter (30) et de préférence en direction de l'arête inférieure de la plaque-support (18), et en ce qu'au moins la paroi supérieure du carter (27.2, 27.4) présente au moins un gradin antiprojection d'eau (28) ou une nervure antiprojection d'eau (41), et en ce qu'il est prévu un couvercle (17) articulé en haut, enserrant de tout côté l'ouverture du carter (30, 40, 41) et qui, dans sa position supérieure d'ouverture (fig. 5), s'appuie, en pivotant au dehors, légèrement au-delà du point mort supérieur.

2. Boîte selon la revendication 1, caractérisée en ce que le carter (16) présente, sur toutes ses quatre parois latérales (26, 27), des gradins (28) qui forment à l'intérieur, pour la plaque-support (18), une surface d'appui inclinée (32) à laquelle se raccorde vers l'arrière un compartiment des appareils dont les dimensions, en hauteur et de préférence aussi en largeur, sont inférieures à celles du compartiment des éléments de manœuvre (20) et dont les parois (26.1, 26.2, 27.1, 27.2) vont en divergeant de tous côtés en direction du gradin (28).

3. Boîte selon l'une des revendications 1 ou 2, caractérisée en ce que la paroi inférieure (27.1) du carter (16) est conçue inclinée en direction d'une rigole et/ou d'une ouverture de collecte du liquide.

4. Boîte selon au moins l'une des revendications précédentes, caractérisée en ce que le compartiment des éléments de manœuvre (20) est limité vers l'avant par une bordure (40) du compartiment des éléments de manœuvre courant verticalement et que surmonte le couvercle pivotant (17).

5. Boîte selon la revendication 4, caractérisée en ce que la bordure (40) du compartiment d'éléments de manœuvre présente une nervure antiprojection d'eau (41) faisant saillie vers l'extérieur.

6. Boîte selon au moins l'une des revendications précédentes, caractérisée en ce que le couvercle (17) présente une paroi avant (45) droite et de préférence verticale, une paroi inférieure (46) inclinée vers l'arrière sur l'horizontale, allant jusqu'au gradin (28) du carter (16), des parois latérales (47) de forme à peu près trapézoïdale et qui vont de la paroi avant (47) du couvercle jusqu'au gradin antiprojection d'eau (28) du carter (16), et une paroi supérieure (48) qui surmonte la nervure antiprojection d'eau supérieure (41), mais dont les dimensions sont toutefois inférieures à celles des zones supérieures des parois latérales (47) de sorte que son arête d'appui (49) repose, en position d'ouverture, sur la paroi supérieure (27.2), située en deçà du gradin antiprojection d'eau (28) du compartiment des appareils (19) et soutient le couvercle (17) près de la position du point mort supérieur.

7. Boîte selon au moins l'une des revendications précédentes, caractérisée en ce que pour toutes les articulations est prévu un axe formant charnière (38) qui passe à travers les parois latérales (47) du couvercle et les parois latérales (26.3, 26.4) du compartiment des éléments de manœuvre (20).

8. Boîte selon la revendication 7, caractérisée en ce que l'axe formant charnière (38) se trouve dans la zone supérieure en avant de la plaque-support (18) et maintient celle-ci appuyée sur la surface d'appui (32) du gradin (28).

9. Boîte selon au moins l'une des revendications précédentes, caractérisée en ce qu'entre la plaque-support (18) de la surface d'appui (32) est prévu une garniture d'étanchéité en appui (33), perméable au gaz, élastique, de préférence en caoutchouc mousse.

10. Boîte selon au moins l'une des revendications précédentes, caractérisée en ce que la plaque-support (18) est fixée au carter (16) dans sa zone inférieure avec des vis (34) qui de préférence fixent simultanément la sécurité (36) à l'égard d'un mouvement du couvercle.

11. Boîte selon au moins l'une des revendications 1 à 9, caractérisée en ce que la plaque-support (18) est enfichée dans sa zone inférieure derrière des talons de fixation.

12. Boîte selon au moins l'une des revendications précédentes, caractérisée en ce que la sécurité à l'égard d'un mouvement de couvercle est constituée d'un dispositif de fixation par crantage ou par aimant (36, 37).

13. Boîte selon au moins l'une des revendications précédentes, caractérisée en ce que carter (16) et de préférence aussi couvercle (17) sont fabriqués en un matériau plastique d'emboutissage profond, de préférence en acrylonitrile-butadiène-styrène (ABS).

14. Boîte selon au moins l'une des revendications précédentes, caractérisée en ce que des entrées de câbles et de fixation dans les parois latérales (26) et dans la paroi inférieure (27.1) sont prévues.

Fig.1

Fig. 2

Fig.3

Fig.4

Fig. 6

Fig. 5